# EUROPEAN PATENT APPLICATION

(11) **EP 4 660 329 A1**
(43) Date of publication of application: **10.12.2025**
(21) Application number: 24750390.7
(22) Date of filing: 01.02.2024
(51) Int. Cl.: C21D 9/46, C21D 8/12, C22C 38/00, C22C 38/60, C23C 22/00, H01F 1/147

(54) **METHOD FOR MANUFACTURING GRAIN-ORIENTED ELECTROMAGNETIC STEEL SHEET**

(30) Priority: 01.02.2023 JP 2023013747
(71) Applicant: NIPPON STEEL CORPORATION, Chiyoda-ku Tokyo 100-8071 (JP)
(72) Inventor: Kataoka, Takashi, Tokyo 100-8071 (JP); Takeda, Kazutoshi, Tokyo 100-8071 (JP)
(74) Representative: Vossius & Partner Patentanwälte Rechtsanwälte mbB
(86) International application number: PCT/JP2024/003318
(87) International publication number: WO 2024/162441

(57) **Abstract**

A method for manufacturing a grain-oriented electrical steel sheet includes a tension-applying insulating coating forming step including an insulating coating chemical solution applying step of applying an insulating coating forming solution to a surface of a surface-treated steel sheet whose surface has been pickled, and a baking step of subjecting the surface-treated steel sheet coated with the insulating coating forming solution to a heat treatment to form a tension-applying insulating coating on the surface of the surface-treated steel sheet, in which the heat treatment in the baking step includes a temperature rising process and a soaking process, in the temperature rising process, the average temperature rising rate of the steel sheet in a steel sheet temperature range of 100°C to 600°C is 10°C/s to 400°C/s in an atmosphere having an oxygen concentration of 1 vol% to 21 vol% and a dew point of 0°C to 30°C, and in the soaking process, a holding time, at a constant steel sheet temperature in a range of 800°C to 1000°C and in a soaking atmosphere whose hydrogen concentration is 1 vol% to 15 vol% and whose atmosphere dew point is a constant value in a range of -20°C to +40°C, is 5 seconds to 200 seconds.

## Description

### TECHNICAL FIELD

The present invention relates to a method for manufacturing a grain-oriented electrical steel sheet.

Priority is claimed on Japanese Patent Application No. 2023-013747, filed February 01, 2023, the content of which is incorporated herein by reference.

### BACKGROUND ART

A grain-oriented electrical steel sheet is a steel sheet that contains silicon (Si) in an amount of about 0.5 mass% to 7 mass% and has crystal orientations integrated in an { 110}<001> orientation (Goss orientation) by utilizing a phenomenon called secondary recrystallization, and is mainly used for cores of transformers or the like as a soft magnetic material. Since the characteristics of grain-oriented electrical steel sheets generally affect the performance of transformers, intensive studies have been conducted on grain-oriented electrical steel sheets in order to achieve favorable excitation characteristics and low iron loss characteristics.

A general method for manufacturing a grain-oriented electrical steel sheet is as follows.

First, a steel piece having a predetermined chemical composition is heated and hot-rolled to manufacture a hot-rolled steel sheet. The obtained hot-rolled steel sheet is subjected to hot-rolled sheet annealing as necessary, and then the hot-rolled steel sheet is pickled. The hot-rolled steel sheet after the pickling is cold-rolled to manufacture a cold-rolled steel sheet. The obtained cold-rolled steel sheet is subjected to decarburization annealing to occur primary recrystallization.

Thereafter, an aqueous slurry containing an annealing separator containing MgO as a main component is applied to the surface of the cold-rolled steel sheet after the decarburization annealing and dried. Thereafter, the steel sheet is wound up into a coil and subjected to finish annealing to occur secondary recrystallization. During the finish annealing, simultaneously with the occurrence of secondary recrystallization in the steel sheet, MgO in the annealing separator reacts with SiO₂ in an internal oxide layer formed on the surface of the cold-rolled steel sheet during the decarburization annealing, such that a glass coating (also referred to as "primary coating") containing forsterite (Mg₂SiO₄) as a main component is formed on the surface of the base steel sheet.

After the finish annealing (after forming the primary coating), a chemical solution containing, for example, silica and a phosphate as main components is applied to an upper layer of the primary coating and baked to form a tension-applying insulating coating (also referred to as "secondary coating").

The primary coating functions as an insulating coating and also has a function of improving adhesion of a secondary coating formed on an upper layer of the primary coating. The iron loss is reduced by the tension of both the primary coating and the secondary coating. However, the primary coating is a non-magnetic phase and is not preferable from the viewpoint of magnetic characteristics. In addition, the interface between the base steel sheet and the primary coating has a complicated structure in which the roots of the primary coating are intricate in the base steel sheet, and may cause an increase in iron loss through inhibition of magnetic domain wall motion in some cases.

### Citation List

### Patent Documents

Patent Document 1: Japanese Unexamined Patent Application, First Publication No. H08-269560
Patent Document 2: PCT International Publication No. WO 2019/182149
Patent Document 3: PCT International Publication No. WO 2020/149345

### SUMMARY OF INVENTION

### Technical Problem

Due to the above background, many inventions related to a grain-oriented electrical steel sheet without a primary coating have been made. For example, Patent Document 1 described above discloses a manufacturing method in which, in an annealing separator applying step before a secondary recrystallization annealing step, a chloride is added to an annealing separator to suppress generation of a primary coating and to peel off the primary coating. This manufacturing method has high industrial value due to its simplicity.

However, since the adhesion of a secondary coating is not sufficient because a primary coating is not formed, for example, in Patent Document 2 described above, protrusions and recesses are formed on a surface of a base steel sheet after secondary recrystallization annealing and before an application and baking step of the secondary coating is performed. According to this manufacturing method, coating adhesion is secured by the anchor effect generated at the interface between the base steel sheet and the secondary coating. However, the protrusions and recesses of the interface may become an obstacle to magnetic domain wall motion when the grain-oriented electrical steel sheet is magnetized, and may become a factor that hinders reduction in iron loss.

In Patent Document 3, prior to the application of the secondary coating chemical solution, the base steel sheet is subjected to intermediate annealing. In this manufacturing method, an oxide film is generated on the surface of the base steel sheet and used as a buffer layer when the secondary coating is brought into close contact with the base steel sheet, and it is possible to achieve both high magnetic characteristics and high coating adhesion. However, since the intermediate annealing step is indispensable in the manufacture, there is another problem in that the manufacture load is high.

The present invention has been made in view of the above circumstances, and an object thereof is to provide a method for manufacturing a grain-oriented electrical steel sheet capable of manufacturing a grain-oriented electrical steel sheet having high coating adhesion (secondary coating adhesion) without impairing magnetic characteristics, without performing intermediate annealing.

### Solution to Problem

In order to solve the above problems and achieve the objects, the present invention adopts the following aspects.
(1) A method for manufacturing a grain-oriented electrical steel sheet according to an aspect of the present invention includes:
   a hot rolling step of heating and hot rolling a slab including, as a chemical composition, by mass%,
   C: 0.020% to 0.150%,
   Si: 3.00% to 4.00%,
   Mn: 0.01% to 0.50%,
   S: 0.0010% to 0.0400%,
   acid-soluble Al: 0.010% to 0.050%,
   N: 0.002% to 0.020%,
   Bi: 0.0000% to 0.0200%,
   P: 0.000% to 0.100%,
   Sn: 0.00% to 0.50%,
   Cu: 0.00% to 0.50%,
   Cr: 0.00% to 0.50%,
   Sb: 0.00% to 0.20%,
   Mo: 0.00% to 0.10%,
   Nb: 0.0000% to 0.0200%,
   B: 0.0000% to 0.0200%,
   Te: 0.0000% to 0.0200%,
   Ni: 0.00% to 0.20%,
   Se: 0.0000% to 0.0200%, and
   a balance being Fe and impurities to obtain a hot-rolled steel sheet;
   a hot-rolled sheet annealing step of subjecting the hot-rolled steel sheet to hot-rolled sheet annealing to obtain a hot-band annealed sheet and then immersing the hot-band annealed sheet in a pickling solution;
   a cold rolling step of subjecting the hot-band annealed sheet to cold rolling to obtain a cold-rolled steel sheet;
   a decarburization annealing step of subjecting the cold-rolled steel sheet to decarburization annealing to obtain a decarburization-annealed sheet;
   a separator applying step of applying an annealing separator containing MgO, Al₂O₃, and a chloride to a surface of the decarburization-annealed sheet;
   a finish annealing step of subjecting the decarburization-annealed sheet coated with the annealing separator to finish annealing to obtain a finish-annealed sheet;
   a surface treatment step of pickling a surface of the finish-annealed sheet to obtain a surface-treated steel sheet; and
   a tension-applying insulating coating forming step including an insulating coating chemical solution applying step of applying an insulating coating forming solution containing 80 mass% or more in total of aluminum phosphate and silica to a surface of the surface-treated steel sheet, and a baking step of subjecting the surface-treated steel sheet coated with the insulating coating forming solution to a heat treatment to form a tension-applying insulating coating on the surface of the surface-treated steel sheet, in which
   the heat treatment in the baking step includes a temperature rising process and a soaking process,
   in the temperature rising process, the average temperature rising rate of the steel sheet in a steel sheet temperature range of 100°C to 600°C is 10°C/s to 400°C/s in an atmosphere having an oxygen concentration of 1 vol% to 21 vol% and a dew point of 0°C to 30°C, and
   in the soaking process, a holding time, at a constant steel sheet temperature in a range of 800°C to 1000°C and in a soaking atmosphere whose hydrogen concentration is 1 vol% to 15 vol% and whose atmosphere dew point is a constant value in a range of - 20°C to +40°C, is 5 seconds to 200 seconds.
(2) In the method for manufacturing a grain-oriented electrical steel sheet described in (1),
   in the annealing separator, a content of MgO may be 0.0 mass% or more and 79.5 mass% or less, a content of Al₂O₃ may be 20.0 mass% or more and 99.5 mass% or less, and the balance may be the chloride.
(3) In the method for manufacturing a grain-oriented electrical steel sheet described in (1) or (2),
   in the surface treatment step, the finish-annealed sheet may be immersed in a treatment solution containing at least one of hydrochloric acid, sulfuric acid, nitric acid, and phosphoric acid, a total acid concentration of 1 vol% to 20 vol%, and a solution temperature of 50°C to 90°C for 3 seconds to 60 seconds.
(4) In the method for manufacturing a grain-oriented electrical steel sheet described in any one of (1) to (3),
   the slab may include, as a chemical composition, by mass%, at least one selected from the group consisting of:
   Bi: more than 0.0000% and 0.0200% or less,
   P: more than 0.000% and 0.100% or less,
   Sn: more than 0.00% and 0.50% or less,
   Cu: more than 0.00% and 0.50% or less,
   Cr: more than 0.00% and 0.50% or less,
   Sb: more than 0.00% and 0.20% or less,
   Mo: more than 0.00% and 0.10% or less,
   Nb: more than 0.0000% and 0.0200% or less,
   B: more than 0.0000% and 0.0200% or less,
   Te: more than 0.0000% and 0.0200% or less,
   Ni: more than 0.00% and 0.20% or less, and
   Se: more than 0.0000% and 0.0200% or less.

### Advantageous Effects of Invention

According to each aspect of the present invention, it is possible to manufacture a grain-oriented electrical steel sheet having high coating adhesion (secondary coating adhesion) without impairing magnetic characteristics, without performing intermediate annealing.

### BRIEF DESCRIPTION OF DRAWINGS

[FIG. 1] A schematic cross-sectional view illustrating a grain-oriented electrical steel sheet obtained by a method for manufacturing a grain-oriented electrical steel sheet according to an embodiment of the present invention.
[FIG. 2] A flowchart illustrating the method for manufacturing a grain-oriented electrical steel sheet according to the embodiment.
[FIG. 3] A view describing a baking step in the manufacturing method, where the horizontal axis represents time and the vertical axis represents a base steel sheet temperature.

### DESCRIPTION OF EMBODIMENTS

A method for manufacturing a grain-oriented electrical steel sheet according to an embodiment of the present invention will be described below. However, the present invention is not limited only to the configuration and steps disclosed in the present embodiment, and various modifications can be made without departing from the gist of the present invention. In addition, a numerical limitation range described below includes the lower limit and the upper limit within the range. On the other hand, a numerical value indicated as "more than" or "less than" is not included in the numerical value range. In addition, unless otherwise specified, the unit "%" regarding the chemical component means "mass%".

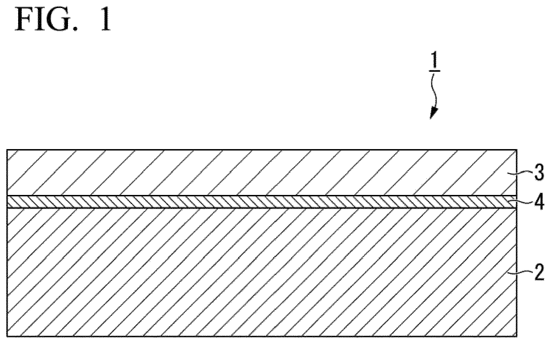

FIG. 1 is a schematic cross-sectional view illustrating a grain-oriented electrical steel sheet (grain-oriented electrical steel sheet according to the present embodiment) obtained by the method for manufacturing a grain-oriented electrical steel sheet according to the present embodiment. As illustrated in FIG. 1, a grain-oriented electrical steel sheet 1 according to the present embodiment includes a base steel sheet 2 and a secondary coating 3 as an insulating coating disposed on a surface of the base steel sheet 2 when viewing a cross section whose cutting direction is parallel to a sheet thickness direction. At the interface between the base steel sheet 2 and the secondary coating 3, only an oxide layer 4 containing a Fe-Al-P-O compound is formed, and substantially no glass coating (hereinafter, also referred to as "primary coating") is present.

The average sheet thickness of the base steel sheet 2 can be, for example, 0.17 mm to 0.29 mm. In addition, the average film thickness of the secondary coating 3 can be, for example, 1.0 µm to 6.0 µm.

In order to improve the iron loss characteristics, it is effective to smooth the surface of the base steel sheet 2 to facilitate magnetic domain wall motion. In addition, it is effective to bring the base steel sheet 2 and the secondary coating 3 into close contact with each other, to apply tension to the base steel sheet 2, and to secure electrical insulation properties between a plurality of grain-oriented electrical steel sheets 1 superposed on each other. In the grain-oriented electrical steel sheet 1 according to the present embodiment, the secondary coating 3 is disposed in contact with the base steel sheet 2 (there is not primary coating) so that the surface smoothness of the base steel sheet 2 is secured. In addition, as described in the manufacturing method described later, the Fe-Al-P-O compound is formed at the interface between the base steel sheet 2 and the secondary coating 3 by controlling the atmosphere conditions, the average temperature rising rate of the steel sheet, the holding time of the soaking temperature, and the like in the baking step of the secondary coating 3, thereby ensuring the adhesion. Therefore, the grain-oriented electrical steel sheet 1 according to the present embodiment is excellent in iron loss characteristics and coating adhesion.

In the Fe-Al-P-O compound, Fe is derived from the base metal component of the base steel sheet 2, and Al and P are derived from an insulating coating forming solution (insulating coating chemical solution). Fe ions diffuse from the base metal side toward the coating side, while Al and P ions diffuse and concentrate from the coating side toward the base metal side. When the Fe ion and the Al or P ion are associated with each other, a chemical bond is generated, and as a result, a Fe-Al-P-O compound is generated. That is, as a result of chemical bonding between the ions in the coating and the base metal (as a result of adhesion of the coating to the base metal), the Fe-Al-P-O compound is observed at the interface between the coating and the base metal.

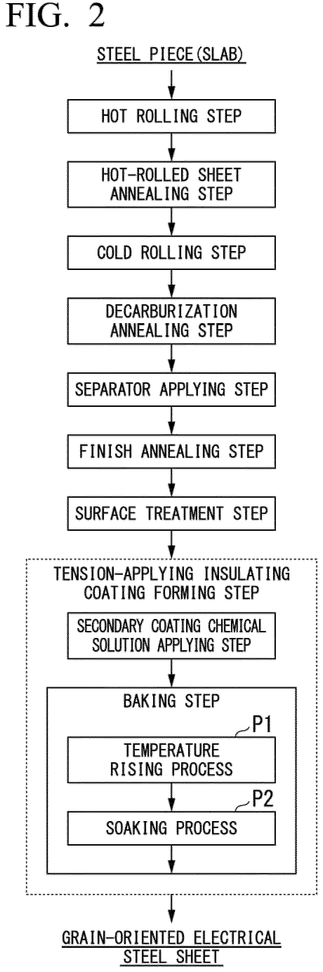

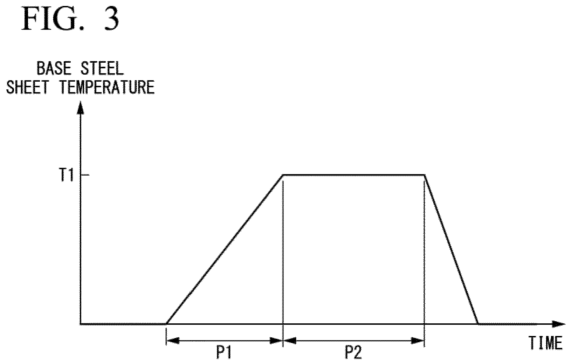

Next, the method for manufacturing a grain-oriented electrical steel sheet according to the present embodiment will be described with reference to FIGS. 2 and 3. The following manufacturing method is an example, and an appropriate change may be added as long as it does not affect the formation of the Fe-Al-P-O compound. FIG. 2 is a flowchart illustrating the method for manufacturing a grain-oriented electrical steel sheet according to the present embodiment. FIG. 3 is a view describing a baking step in the manufacturing method, where the horizontal axis represents time and the vertical axis represents a base steel sheet temperature.

The method for manufacturing a grain-oriented electrical steel sheet according to the present embodiment mainly includes a hot rolling step of heating a slab (steel piece) having a predetermined chemical composition and performing hot rolling to obtain a hot-rolled steel sheet, a hot-rolled sheet annealing step of subjecting the hot-rolled steel sheet to hot-rolled sheet annealing to obtain a hot-band annealed sheet and then immersing the hot-band annealed sheet in a pickling solution, a cold rolling step of subjecting the hot-band annealed sheet to cold rolling to obtain a cold-rolled steel sheet, a decarburization annealing step of subjecting the cold-rolled steel sheet to decarburization annealing to obtain a decarburization-annealed sheet, a separator applying step of applying an annealing separator to a surface of the decarburization-annealed sheet, a finish annealing step of subjecting the decarburization-annealed sheet coated with the annealing separator to finish annealing to obtain a finish-annealed sheet, a surface treatment step of pickling a surface of the finish-annealed sheet to obtain a surface-treated steel sheet, an insulating coating chemical solution applying step of applying an insulating coating forming solution, and a tension-applying insulating coating forming step including a temperature rising process and a soaking process performed after the temperature rising process, in which a tension-applying insulating coating containing aluminum phosphate and silica is formed on a surface of the surface-treated steel sheet.

In the temperature rising process, the average temperature rising rate of the steel sheet in a steel sheet temperature range of 100°C to 600°C is 10°C/s to 400°C/s in an atmosphere having an oxygen concentration of 1 vol% to 21 vol% and a dew point of 0°C to 30°C. Further, in the soaking process, the holding time, at a constant steel sheet temperature in a range of 800°C to 1000°C and in a soaking atmosphere whose hydrogen concentration is 1 vol% to 15 vol% and whose atmosphere dew point is a constant value in a range of -20°C to +40°C, is 5 seconds to 200 seconds.

Details of each of the above steps will be described below. In the following description, in a case where the conditions of each step are not described, it is sufficient if known conditions are appropriately applied.

### [Hot Rolling Step]

In the hot rolling step, a steel piece (for example, a steel ingot such as a slab) having a predetermined chemical composition is hot-rolled. For example, the slab (steel piece) subjected to the hot rolling step may include, as a chemical composition, by mass%,
C: 0.020% to 0.150%,
Si: 3.00% to 4.00%,
Mn: 0.01% to 0.50%,
S: 0.0010% to 0.0400%,
acid-soluble Al: 0.010% to 0.050%,
N: 0.002% to 0.020%,
Bi: 0.0000% to 0.0200%,
P: 0.000% to 0.100%,
Sn: 0.00% to 0.50%,
Cu: 0.00% to 0.50%,
Cr: 0.00% to 0.50%,
Sb: 0.00% to 0.20%,
Mo: 0.00% to 0.10%,
Nb: 0.0000% to 0.0200%,
B: 0.0000% to 0.0200%,
Te: 0.0000% to 0.0200%,
Ni: 0.00% to 0.20%,
Se: 0.0000% to 0.0200%, and
a balance being Fe and impurities.

In addition, the slab (steel piece) may include, as a chemical composition, by mass%, at least one selected from the group consisting of:
Bi: more than 0.0000% and 0.0200% or less,
P: more than 0.000% and 0.100% or less,
Sn: more than 0.00% and 0.50% or less,
Cu: more than 0.00% and 0.50% or less,
Cr: more than 0.00% and 0.50% or less,
Sb: more than 0.00% and 0.20% or less,
Mo: more than 0.00% and 0.10% or less,
Nb: more than 0.0000% and 0.0200% or less,
B: more than 0.0000% and 0.0200% or less,
Te: more than 0.0000% and 0.0200% or less,
Ni: more than 0.00% and 0.20% or less, and
Se: more than 0.0000% and 0.0200% or less.

### C: 0.020% to 0.150%

C (carbon) is a basic element for the steel piece (slab). C is included for the purpose of increasing the development degree of the Goss orientation in secondary recrystallization. The C content necessary for improving magnetic characteristics is 0.020% or more, preferably 0.040% or more, and more preferably 0.050% or more as a slab. However, excessive residual of C in a final product may be a factor of iron loss deterioration. Therefore, it is necessary to perform a decarburization treatment in the decarburization annealing step. When the C as a slab is more than 0.150%, the decarburization treatment becomes difficult, and thus the c content of the slab is 0.150% or less, preferably 0.120% or less, and more preferably 0.100% or less.

### Si: 3.00% to 4.00%

Si (silicon) is a basic element for the steel piece (slab). When the Si content is less than 3.00%, the eddy-current loss cannot be sufficiently reduced, so that favorable magnetic characteristics cannot be obtained. Therefore, the Si content is 3.00% or more. The Si content is preferably 3.10% or more, and more preferably 3.20% or more. On the other hand, when the Si content is more than 4.00%, the steel sheet is embrittled, and passability is significantly deteriorated during manufacture. Therefore, the Si content is 4.00% or less. The Si content is preferably 3.80% or less, and more preferably 3.60% or less.

### Mn: 0.01% to 0.50%

Mn (manganese) is a basic element for the steel piece (slab). When the Mn content is less than 0.01%, MnS (MnSe in the case of using Se as a part of S) functioning as an inhibitor is hardly formed, secondary recrystallization does not sufficiently proceed, and favorable magnetic characteristics cannot be obtained. Therefore, the Mn content is 0.01% or more. The Mn content is preferably 0.03% or more, and more preferably 0.06% or more. On the other hand, when the Mn content is more than 0.50%, the steel undergoes phase transformation during finish annealing, secondary recrystallization does not sufficiently proceed, and favorable magnetic characteristics cannot be obtained, and therefore the Mn content is 0.50% or less. The Mn content is preferably 0.30% or less, and more preferably 0.20% or less.

### S: 0.0010% to 0.0400%

### Se: 0.0000 to 0.0200%

S (sulfur) is a basic element for the steel piece (slab). S is an element that forms MnS, which is an inhibitor. The S content is 0.0010% or more, preferably 0.0100% or more, and more preferably 0.0150% or more as a slab. On the other hand, as a slab, the S content exceeding 0.0400% is a cause of hot embrittlement, and hot rolling may be difficult. The S content is 0.0400% or less, preferably 0.0350% or less, and more preferably 0.0300% or less as a slab. Excessive residual of S in a final product may also be a cause of magnetism deterioration. Therefore, S also needs to be removed (purified) from the base steel sheet during finish annealing.

Since Se (selenium) is also an element that forms MnSe, Se may be used as a part of S (the Se content may be more than 0.0000%). When Se is excessively present, secondary recrystallization becomes unstable, which may cause magnetism deterioration. Therefore, the Se content needs to be 0.0000% or more and 0.0200% or less. The Se content is preferably 0.0000% or more and 0.0150% or less, and more preferably 0.0000% or more and 0.0100% or less.

### Acid-Soluble Al: 0.010% to 0.050%

Acid-soluble Al (aluminum) (sol.Al) is a basic element for the steel piece (slab). Acid-soluble Al is an element necessary for forming AIN as an inhibitor and increasing the magnetic characteristics. The acid-soluble Al content is 0.010% or more, preferably 0.015% or more, and more preferably 0.020% or more as a slab. On the other hand, when acid-soluble Al is excessively contained in the slab, embrittlement may be remarkable. The acid-soluble Al content is 0.050% or less, preferably 0.040% or less, and more preferably 0.030% or less as a slab. Similarly to N, acid-soluble Al needs to be removed (purified) from the base steel sheet during finish annealing.

### N: 0.002% to 0.020%

N (nitrogen) is a basic element for the steel piece (slab). N is an element necessary for forming AlN as an inhibitor and increasing the development degree of the Goss orientation during secondary recrystallization. The N content necessary for inhibitor formation is 0.002% or more, preferably 0.004% or more, and more preferably 0.006% or more as a slab. On the other hand, as a slab, when the N content is more than 0.020%, blisters (pores) are generated in the steel sheet during cold rolling, the strength of the steel sheet increases, and passability during manufacture may be deteriorated. The N content is 0.020% or less, preferably 0.015% or less, and more preferably 0.010% or less as a slab. Similarly to C, excessive residual of N in a final product may be a cause of magnetism deterioration. Therefore, N needs to be removed (purified) at the time of finish annealing.

### P: 0.000% to 0.100%

P (phosphorus) is an optional element for the steel piece (slab). When the P content is more than 0.100%, the workability of the steel sheet may be significantly deteriorated. Therefore, the P content may be 0.100% or less. The P content is preferably 0.070% or less, and more preferably 0.030% or less. On the other hand, the lower limit of the P content is not particularly limited, and may be 0.000%. However, since P has an effect of improving the texture and improving the magnetic characteristics of the steel sheet, the P content may be more than 0.000% or 0.005% or more.

### Bi: 0.0000% to 0.0200%

Bi (bismuth) is an optional element for the steel piece (slab). When the Bi content is more than 0.0200%, the passability during cold rolling may be deteriorated. In addition, when the purification at the time of the finish annealing is insufficient and Bi remains excessively, the magnetic characteristics may be adversely affected. Therefore, the Bi content may be 0.0200% or less. The Bi content is preferably 0.0150% or less, and more preferably 0.0100% or less. On the other hand, the lower limit of the Bi content is not particularly limited, and may be 0.0000%. However, since Bi has an effect of improving magnetic characteristics, the Bi content may be more than 0.0000% or 0.0005% or more.

### Sn: 0.00% to 0.50%

Sn (tin) is an optional element for the steel piece (slab). When the Sn content is more than 0.50%, secondary recrystallization becomes unstable, and magnetic characteristics may be adversely affected. Therefore, the Sn content may be 0.50% or less. The Sn content is preferably 0.40% or less, and more preferably 0.30% or less. On the other hand, the lower limit of the Sn content is not particularly limited, and may be 0.00%. However, since Sn has an effect of improving magnetic characteristics by increasing the development degree of the Goss orientation, the Sn content may be more than 0.00%, 0.01% or more, or 0.03% or more.

### Cu: 0.00% to 0.50%

Cu (copper) is an optional element for the steel piece (slab). When the Cu content exceeds 0.50%, the steel sheet may be embrittled during hot rolling. Therefore, the Cu content may be 0.50% or less. The Cu content is preferably 0.40% or less, and more preferably 0.30% or less. On the other hand, the lower limit of the Cu content is not particularly limited, and may be 0.00%. However, since Cu has an effect of improving magnetic characteristics by increasing the development degree of the Goss orientation, the Cu content may be more than 0.00%, 0.01% or more, or 0.03% or more.

### Cr: 0.00% to 0.50%

Cr (chromium) is an optional element for the steel piece (slab). When the Cr content is more than 0.50%, a Cr oxide is formed, and magnetic characteristics may be adversely affected. Therefore, the Cr content may be 0.50% or less. The Cr content is preferably 0.40% or less, and more preferably 0.30% or less. On the other hand, the lower limit of the Cr content is not particularly limited, and may be 0.00%. However, since Cr has an effect of improving magnetic characteristics by increasing the development degree of the Goss orientation, the Cr content may be more than 0.00%, 0.01% or more, or 0.03% or more.

### Sb: 0.00% to 0.20%

Sb (antimony) is an optional element for the steel piece (slab). When the Sb content is more than 0.20%, magnetic characteristics may be adversely affected. Therefore, the Sb content may be 0.20% or less. The Sb content is preferably 0.15% or less, and more preferably 0.10% or less. On the other hand, the lower limit of the Sb content is not particularly limited, and may be 0.00%. However, since Sb functions as an inhibitor and has an effect of stabilizing secondary recrystallization, the Sb content may be more than 0.00% or 0.01% or more.

### Mo: 0.00% to 0.10%

Mo (molybdenum) is an optional element for the steel piece (slab). When the Mo content is more than 0.10%, a problem may occur in the rollability of the steel sheet. Therefore, the Mo content may be 0.10% or less. The Mo content is preferably 0.05% or less, and more preferably 0.03% or less. On the other hand, the lower limit of the Mo content is not particularly limited, and may be 0.00%. However, since Mo has an effect of improving magnetic characteristics by increasing the development degree of the Goss orientation, the Mo content may be more than 0.00% or 0.01% or more.

### Nb: 0.0000% to 0.0200%

Nb (niobium) is an optional element for the steel piece (slab). When the Nb content is more than 0.0200%, secondary recrystallization may become unstable. Therefore, the Nb content may be 0.0200% or less. The Nb content is preferably 0.0100% or less, and more preferably 0.0050% or less. On the other hand, the lower limit of the Nb content is not particularly limited, and may be 0.0000%. However, since Nb has an action of stabilizing secondary recrystallization, the Nb content may be more than 0.0000% or 0.0005% or more.

### B: 0.0000% to 0.0200%

B (boron) is an optional element for the steel piece (slab). When the B content is more than 0.0200%, secondary recrystallization may become unstable. Therefore, the B content may be 0.0200% or less. The B content is preferably 0.0100% or less, and more preferably 0.0050% or less. On the other hand, the lower limit of the B content is not particularly limited, and may be 0.0000%. However, since B has an action of stabilizing secondary recrystallization, the B content may be more than 0.0000% or 0.0005% or more.

### Te: 0.0000% to 0.0200%

Te (tellurium) is an optional element for the steel piece (slab). When the Te content is more than 0.0200%, fracture may occur during hot rolling or cold rolling. Therefore, the Te content may be 0.0200% or less. The Te content is preferably 0.0150% or less, and more preferably 0.0100% or less. On the other hand, the lower limit of the Te content is not particularly limited, and may be 0.0000%. However, since Te has an action of stabilizing secondary recrystallization, the Te content may be more than 0.0000% or 0.0005% or more.

### Ni: 0.00% to 0.20%

Ni (nickel) is an optional element for the steel piece (slab). Ni is an effective element that affects crystal orientation rotation occurring during cold rolling and obtains a favorable texture for secondary recrystallization. Ni is also an element effective for increasing the specific resistance of the steel sheet and reducing the iron loss. Thus, Ni may be contained. When Ni is contained, the Ni content is preferably more than 0.00% and more preferably 0.01% or more in order to obtain these effects.

On the other hand, when the Ni content is more than 0.20%, secondary recrystallization may become unstable. Thus, when contained, the Ni content is 0.20% or less. The Ni content is preferably 0.15% or less, and more preferably 0.10% or less.

The steel piece (slab) subjected to the hot rolling step may contain impurities. The "impurities" means those mixed from ore as a raw material, scrap, a manufacturing environment, or the like when the steel is industrially manufactured.

The chemical composition of the steel piece (slab) subjected to the hot rolling step may be measured by a general analysis method. For example, the chemical composition may be measured using inductively coupled plasma-atomic emission spectrometry (ICP-AES). It is sufficient if acid-soluble Al is measured by the ICP-AES using a filtrate after a sample is thermally decomposed with acid. C and S may be measured by a combustion-infrared absorption method, and N may be measured by an inert gas fusion-thermal conductivity method.

In the hot rolling step, first, the slab (steel piece) is heat-treated. The heating temperature may be, for example, 1200°C or higher and 1600°C or lower. The heating temperature is preferably 1280°C or higher and more preferably 1500°C or lower. The heated slab is then hot rolled. The sheet thickness of the hot-rolled steel sheet after the hot rolling is preferably, for example, in a range of 2.0 mm or more and 3.0 mm or less.

### [Hot-rolled sheet annealing Step]

In the hot-rolled sheet annealing step, the hot-rolled steel sheet obtained in the hot rolling step is annealed. By performing the hot-rolled sheet annealing, recrystallization occurs in the steel sheet, and finally favorable magnetic characteristics can be achieved. The conditions of the hot-rolled sheet annealing are not particularly limited, but for example, it is sufficient if the hot-rolled steel sheet is annealed in a temperature range of 900°C to 1200°C for 10 seconds to 5 minutes.

After the hot-rolled sheet annealing step, pickling is continuously performed. In this pickling, the surface of the hot-rolled steel sheet after the hot-rolled sheet annealing is immersed in a pickling solution to be pickled, thereby obtaining a hot-band annealed sheet.

### [Cold Rolling Step]

In the cold rolling step, the hot-band annealed sheet after the hot-rolled sheet annealing step is subjected to one time cold rolling or a plurality of times of cold rolling including intermediate annealing. As used herein, "once" means that cold rolling of one pass or cold rolling of a plurality of passes or intermediate annealing is performed once. When the intermediate annealing is performed during the cold rolling, the heating method of the intermediate annealing is not particularly limited. In addition, the cold rolling may be performed three or more times including intermediate annealing, but since the manufacturing cost increases, it is preferable to perform the cold rolling once or twice.

It is sufficient if the final cold rolling reduction (cumulative cold rolling ratio without intermediate annealing, or cumulative cold rolling ratio after final intermediate annealing in the case of performing intermediate annealing) in the cold rolling is, for example, in a range of 80% or more and 95% or less. By setting the final cold rolling reduction within the above range, the development degree in the { 110} <001> orientation can be finally increased, and destabilization of secondary recrystallization can be suppressed. The sheet thickness of the cold-rolled steel sheet subjected to the cold rolling is usually the sheet thickness (final sheet thickness) of the base steel sheet of the grain-oriented electrical steel sheet to be finally manufactured. The sheet thickness of the cold-rolled steel sheet after the cold rolling is preferably, for example, in a range of 0.15 mm or more and 0.30 mm or less.

### [Decarburization Annealing Step]

In the decarburization annealing step, the cold-rolled steel sheet obtained in the cold rolling step is decarburization-annealed. By this decarburization annealing, C contained in the cold-rolled steel sheet is removed, and primary recrystallization occurs. The decarburization annealing is preferably performed in a wet atmosphere in order to remove C contained in the cold-rolled steel sheet, and for example, it is sufficient if annealing is performed in a wet atmosphere in a temperature range of 700°C to 1000°C for 10 seconds to 10 minutes. From the viewpoint of improving magnetism, in the temperature-raising step, the temperature range of 500°C to 800°C may be 100°C/s or more and 3000°C/s or less.

In addition, a nitriding treatment may be performed after the decarburization annealing and before application of the annealing separator. In the nitriding treatment, the decarburization-annealed sheet after the decarburization annealing is subjected to the nitriding treatment to manufacture a nitriding-treated steel sheet. For example, it is sufficient if annealing is performed in a temperature range of 700°C to 850°C for 10 seconds to 60 seconds in an atmosphere containing a gas having nitriding ability such as hydrogen, nitrogen, and ammonia.

### [Separator Applying Step]

In the separator applying step, in order to prevent the coiled steel sheet from being baked during the subsequent finish annealing step, an annealing separator is applied to the decarburization-annealed sheet obtained in the decarburization annealing step (further subjected to a nitriding treatment as necessary) and dried before the finish annealing step.

The annealing separator contains a magnesia (MgO), an alumina (Al₂O₃), and a chloride. It is preferable that each component in the annealing separator has a total amount of MgO and Al₂O₃ of 80.0 mass% or more and 99.5 mass% or less in terms of solid content, and the balance is chloride. That is, the content of the chloride in the annealing separator is a value obtained by subtracting the total amount of MgO and Al₂O₃ from 100 mass%, and is preferably 0.5 mass% or more and 20.0 mass% or less. The balance may include impurities.

In the annealing separator, the content that can be taken as MgO alone is preferably 0.0 mass% or more and 79.5 mass% or less, and the content that can be taken as Al₂O₃ alone is preferably 20.0 mass% or more and 99.5 mass% or less.

The total amount of MgO and Al₂O₃ is more preferably 85.0 mass% or more, and still more preferably 90.0 mass% or more. The total amount of MgO and Al₂O₃ is more preferably 99.0 mass% or less, and still more preferably 95.0 mass% or less.

On the other hand, the content of the chloride as the balance is more preferably 1.0 mass% or more and still more preferably 5.0 mass% or more. In addition, the chloride content is more preferably 15.0 mass% or less, and still more preferably 10.0 mass% or less.

Although the chloride is not particularly specified, for example, bismuth oxychloride (BiOCl), bismuth trichloride (BiCl₃), calcium chloride, iron chloride, cobalt chloride, nickel chloride, and the like can be considered.

### [Finish Annealing Step]

In the finish annealing step subsequent to the separator applying step, the decarburization-annealed sheet coated with the annealing separator in advance is subjected to finish annealing. For the finish annealing, the annealing is performed for a long time in a state where the steel sheet is wound in a coil shape.

The annealing conditions of the finish annealing are not particularly limited, and it is sufficient if known conditions are appropriately adopted. For example, in the finish annealing, it is sufficient if the decarburization-annealed sheet to which the annealing separator is applied and dried is held in a temperature range of 1000°C or more and 1300°C or less for 10 hours or more and 60 hours or less. It is sufficient if the atmosphere at the time of the finish annealing is, for example, a nitrogen atmosphere or a mixed atmosphere of nitrogen and hydrogen. In addition, after the finish annealing, the surface of the finish-annealed sheet may be washed to perform powder removal.

By this finish annealing, secondary recrystallization occurs in the steel sheet, and the crystal orientation is oriented to the {110}<001> orientation. In this secondary recrystallization structure, the magnetization easy axes are aligned in the rolling direction, and the grains are coarse. Due to this secondary recrystallization structure, excellent magnetic characteristics can be obtained. In the present embodiment, since the annealing separator contains a chloride, the formation of the primary coating is suppressed, and the surface of the finish-annealed sheet becomes smooth.

In addition, the atmosphere at the time of the finish annealing may be changed to a hydrogen atmosphere to perform a purification treatment. By this purification treatment, elements such as Al, N, and S (also including Se in the case of using Se as a part of S) contained in the steel sheet as a steel composition are discharged to the outside of the system, and the steel sheet is purified.

After the finish-annealed sheet is obtained by the finish annealing step, the surface treatment step is continuously performed without performing intermediate annealing.

### [Surface Treatment Step]

In this step, the surface of the finish-annealed sheet obtained in the finish annealing step is pickled to obtain a surface-treated steel sheet. The pickling conditions at this time are not particularly specified, but for example, it is sufficient if the finish-annealed sheet is immersed in an acid (treatment solution) having a specific concentration. It is preferable that the treatment solution contains at least one of a hydrochloric acid, a sulfuric acid, a nitric acid, and a phosphoric acid, and has a total acid concentration of 1 vol% to 20 vol% and a solution temperature of 50°C to 90°C. The surface treatment of the finish-annealed sheet is preferably performed for 3 seconds to 60 seconds using the treatment solution.

In this step, the annealing separator adhering to the surface of the finish-annealed sheet is removed. At that time, it is preferable to perform the surface treatment under the condition that etch pits are not formed on the surface of the finish-annealed sheet. Therefore, it is sufficient if each of the above conditions is controlled in a complex and inseparable manner. For example, when the pickling strength is increased for some conditions among the above conditions, it is sufficient if the smooth state of the surface is ensured by changing the pickling strength so as to be weakened for the other conditions among the above conditions. Since those skilled in the art can execute surface control including pickling behavior, it is possible to control the surface state by combining the above conditions in consideration of the effect of the above conditions on the pickling strength.

When the total acid concentration of the treatment solution is less than 1 vol%, it is difficult to remove the annealing separator on the surface of the finish-annealed sheet. The annealing separator remaining on the surface makes it difficult to form an internally oxidized SiO₂ in the next tension-applying insulating coating forming step. On the other hand, when the total acid concentration of the treatment solution is more than 20 vol%, etch pits are likely to be formed on the surface of the finish-annealed sheet. Similarly, when the solution temperature of the treatment solution is lower than 50°C, an active surface state cannot be obtained, and when the solution temperature of the treatment solution is higher than 90°C, etch pits are likely to be formed. Similarly, when the treatment time of the surface treatment is less than 3 seconds, an active surface state cannot be obtained, and when the treatment time of the surface treatment is more than 60 seconds, etch pits are likely to be formed.

### [Tension-Applying Insulating Coating Forming Step]

The tension-applying insulating coating forming step is performed subsequent to the surface treatment step. The tension-applying insulating coating forming step is to form a tension-applying insulating coating containing aluminum phosphate and silica on the surface of the surface-treated steel sheet, and includes an insulating coating chemical solution applying step and a baking step.

In the insulating coating chemical solution applying step, an insulating coating forming solution (hereinafter, also referred to as "insulating coating chemical solution") containing aluminum phosphate and silica is applied to the surface of the surface-treated steel sheet. The total amount of aluminum phosphate and silica is 80 mass% or more. The total amount of aluminum phosphate and silica is preferably 90 mass% or more and more preferably 95 mass% or more. The insulating coating chemical solution preferably does not contain chromium.

The silica is not limited to silica having a specific property. The particle size is not limited to a specific particle size, but is preferably 200 nm (number average particle size) or less. For example, the particle size may be 5 nm to 30 nm. When the particle size exceeds 200 nm, silica may settle in the coating solution.

In the baking step subsequent to the insulating coating chemical solution applying step, the surface-treated steel sheet coated with the insulating coating chemical solution is subjected to a heat treatment to form an insulating coating (secondary coating 3) on the surface of the surface-treated steel sheet. This insulation coating (tension-applying insulating coating) reduces the iron loss as a single steel sheet by applying tension to the grain-oriented electrical steel sheet, and reduces the iron loss as a core by securing electrical insulation properties between the steel sheets when the grain-oriented electrical steel sheets are stacked and used.

The heat treatment performed in the baking step will be described with reference to FIG. 3. FIG. 3 is a view describing a baking step, where the horizontal axis represents time and the vertical axis represents a base steel sheet temperature.

The baking step includes a temperature rising process P1 of heating the surface-treated steel sheet to raise the temperature of the surface-treated steel sheet and a soaking process P2 performed after the temperature rising process P1.

### <Temperature Raising Process P1>

The temperature rising process P1 is an important process of controlling the interaction between the surface of the surface-treated steel sheet and the insulating coating chemical solution in contact with the surface at the interface therebetween. In the temperature rising process P1, the average temperature rising rate of the steel sheet in a steel sheet temperature range of 100°C to 600°C is 10°C/s to 400°C/s in an atmosphere having an oxygen concentration of 1 vol% to 21 vol% and a dew point of 0°C to 30°C.

In the temperature rising process Pl, by setting the atmosphere during the temperature raising to the above range, reduction of Al(PO)₄ and SiO₂ in the insulating coating chemical solution is suppressed, so that high coating adhesion can be obtained.

In the temperature rising process P1, Fe dissolve from the surface-treated steel sheet into the insulating coating chemical solution, and Fe atoms diffuse into the insulating coating chemical solution. Fe is solid-soived in Al(PO)₄, and a nucleus of a Fe-Al-P-O compound is formed on the surface of the base steel sheet. When the average temperature rising rate of the steel sheet in the temperature rising process P1 is more than 400°C/s, no Fe-Al-P-O compound is generated, and thus the average temperature rising rate of the steel sheet is set to 400°C/s or less.

On the other hand, when the average temperature rising rate of the steel sheet is less than 10°C/s by using the temperature rising process P1 as slow heating, FeO and Fe₃O₄ are formed at the interface between insulating coating chemical solution and the surface of the base steel sheet. Since these FeO and Fe₃O₄ serve as starting points of peeling of coating, they become factors that inhibit improvement in coating adhesion. Therefore, the average temperature rising rate of the steel sheet is 10°C/s or more. The average temperature rising rate of the steel sheet is preferably 20°C/s or more and more preferably 50°C/s or more.

The steel sheet temperature at which FeO and Fe₃O₄ are precipitated is 400°C to 600°C. Therefore, it is conceivable to control the average temperature rising rate of the steel sheet in a temperature range of at least 400°C to 600°C to a range of 10°C/s to 400°C/s. However, since special equipment is required to control the average temperature rising rate of the steel sheet only in a narrow temperature range of 400°C to 600°C, the control start time of the average temperature rising rate of the steel sheet may be set to a relatively low temperature range of about 100°C. However, even in this case, the average temperature rising rate of the steel sheet in a temperature range of at least 400°C to 600°C is controlled to a range of 10°C/s to 400°C/s.

When the oxygen concentration in the atmosphere is less than 1 vol%, an oxide film of Fe₂SiO₄ or SiO₂ is generated at the interface between the insulating coating chemical solution and the steel sheet. Since these oxide films have an action of suppressing the formation of Fe-Al-P-O, the coating adhesion becomes poor. On the other hand, when the oxygen concentration is more than 21 vol%, FeO and Fe₃O₄ are generated at the interface between the insulating coating chemical solution and the steel sheet, and the coating adhesion becomes poor.

When the dew point of the atmosphere is lower than 0°C, an oxide film of Fe₂SiO₄ or SiO₂ is generated at the interface, and the coating adhesion becomes poor. On the other hand, when the dew point is higher than 30°C, FeO and Fe₃O₄ are generated at the interface, and the coating adhesion becomes poor.

When the steel sheet temperature reaches 600°C, a necessary and sufficient nucleus of the Fe-Al-P-O compound is formed on the surface of the base steel sheet. The heat cycle from the time point at which the temperature reaches 600°C to the start of the soaking process P2 does not significantly affect the nucleus of the Fe-Al-P-O compound. Therefore, when the steel sheet temperature reaches 600°C, the temperature may be once lowered to room temperature, and then reheating may be started to perform the soaking process P2. Alternatively, as shown in FIG. 3, even after the steel sheet temperature reaches 600°C, the steel sheet may be continuously heated to a soaking temperature T1 (a constant steel sheet temperature in a range of 800°C to 1000°C), and then the soaking process P2 may be continuously performed. In any of these cases, the nucleus of the Fe-Al-P-O compound once generated remains on the surface of the base steel sheet as it is.

### <Soaking Process P2>

In the subsequent soaking process P2, the steel sheet temperature is maintained at the soaking temperature T1 in FIG. 3. The soaking temperature T1 is specifically a constant steel sheet temperature selected from a range of 800°C to 1000°C. In the soaking process P2, the soaking atmosphere is, for example, a mixed gas of an inert gas (nitrogen or argon), hydrogen, and water vapor. At this time, the hydrogen concentration in the soaking atmosphere is set to 1 vol% to 15 vol%, and the dew point is set to -20°C to +40°C. The temperature holding time in the soaking process P2 is in a range of 5 seconds to 200 seconds.

When the holding time is less than 5 seconds, the time required for nucleation of the Fe-Al-P-O compound generated in the temperature rising process P1 cannot be secured, and the coating adhesion becomes poor. On the other hand, when the holding time is more than 200 seconds, the secondary coating is crystallized, and the coating adhesion becomes poor.

The soaking process P2 is an important process of growing the nucleus of the Fe-Al-P-O compound generated in the temperature rising process P1, and particularly, it is important to control both the soaking temperature and the soaking atmosphere. When the soaking temperature T1 is lower than 800°C, the nucleus of the Fe-Al-P-O compound cannot sufficiently grow, and as a result, sufficient coating adhesion cannot be secured. Therefore, the soaking temperature T1 is 800°C or higher. The soaking temperature T1 is preferably 820°C or higher and more preferably 840°C or higher.

On the other hand, when the soaking temperature T1 is higher than 1000°C, the generated secondary coating is crystallized, which may lead to peeling of the coating. Therefore, from the viewpoint of preventing deterioration of coating adhesion, the soaking temperature T1 is 1000°C or lower. The soaking temperature T1 is preferably 950°C or lower and more preferably 900°C or lower.

For the above reason, it is necessary to control the soaking temperature T1 in the soaking process P2 to a constant steel sheet temperature in a range of 800°C to 1000°C.

In the soaking process P2, it is also important to control the soaking atmosphere. Specifically, the soaking atmosphere is controlled such that the hydrogen concentration in the annealing atmosphere is set to 1 vol% to 15 vol% and the atmosphere dew point is set to a substantially constant value (for example, ±5°C) in a range of -20°C to +40°C. By this control, the nucleus of the Fe-Al-P-O compound generated in the temperature rising process P1 grows most stably. If the soaking process P2 is performed in a state where the hydrogen concentration is less than 1%, there is a possibility that a Fe-based oxide such as FeO, which is a deterioration factor of coating adhesion, is generated. Therefore, the hydrogen concentration is 1 vol% or more. The hydrogen concentration is preferably 2 vol% or more and more preferably 3 vol% or more.

When the atmosphere dew point is lower than -20°C, the nucleus of the Fe-Al-P-O compound generated in the temperature rising process P1 is reduced, so that the coating adhesion is deteriorated. The atmosphere dew point is -20°C or higher. The atmosphere dew point is preferably 0°C or higher and more preferably 15°C or higher.

On the other hand, when the hydrogen concentration in the atmosphere is more than 15 vol%, there is a possibility that FeP is generated from the Fe-Al-P-O compound. FeP causes voids to be formed in the secondary coating. When a large number of voids are generated in the secondary coating, this causes peeling of the coating, and significantly reduces the coating adhesion. Therefore, the hydrogen concentration is 15 vol% or less. The hydrogen concentration is preferably 10 vol% or less and more preferably 5 vol% or less.

When the atmosphere dew point is higher than +40°C, there is a possibility that a Fe-based oxide such as FeO, which is a deterioration factor of coating adhesion, is generated. Therefore, the atmosphere dew point is +40°C or lower. The atmosphere dew point is preferably +35°C or lower and more preferably +30°C or lower.

The grain-oriented electrical steel sheet 1 illustrated in FIG. 1 is manufactured by the above steps.

After the formation of the secondary coating, flattening annealing for shape correction may be performed as necessary. By performing flattening annealing on the steel sheet, the iron loss can be further reduced.

Before the secondary coating forming step or after the secondary coating forming step, a magnetic domain control treatment may be performed as necessary. By performing the magnetic domain control treatment, the iron loss of the grain-oriented electrical steel sheet can be further reduced.

When the magnetic domain control treatment is performed before the secondary coating forming step, it is sufficient if linear or dotted groove parts extending in a direction intersecting the rolling direction are formed at predetermined intervals along the rolling direction. In addition, when the magnetic domain control treatment is performed after the secondary coating forming step, it is sufficient if linear or dotted stress strain parts extending in a direction intersecting the rolling direction are formed at predetermined intervals along the rolling direction. The width of the 180° magnetic domain is narrowed (180° magnetic domain is refined) by the magnetic domain control treatment.

In a case where a groove part is formed, a mechanical groove forming method using a gear or the like, a chemical groove forming method by electrolytic etching, a thermal groove forming method by laser irradiation, and the like can be applied. In addition, in the case of forming a stress strain part, laser beam irradiation, electron beam irradiation, or the like can be applied.

According to the method for manufacturing a grain-oriented electrical steel sheet described above, it is possible to manufacture a grain-oriented electrical steel sheet having high magnetic characteristics and high coating adhesion without requiring an intermediate annealing step which is conventionally necessary.

### Examples

Next, the effects of one aspect of the present invention will be more specifically described with reference to Examples, but various conditions in Examples are examples adopted to confirm the feasibility and effects of the present invention, and the present invention is not limited only to these examples. The present invention can adopt various conditions as long as the object of the present invention is achieved without departing from the gist of the present invention.

First, in the hot rolling step, Slab (steel piece) Nos. a to 1 having chemical compositions shown in Table 1 below were prepared.

**[Table 1]**

| Slab No. | Chemical composition of slab (mass%, balance: Fe and impurities) | | | | | | | | | | | | | | | | | |
|---|---|---|---|---|---|---|---|---|---|---|---|---|---|---|---|---|---|---|
| | C | Si | Mn | S | sol. Al | N | P | Cu | Sn | Cr | B | Te | Nb | Ni | Sb | Bi | Se | Mo |
| a | 0.037 | 3.08 | 0.02 | 0.0060 | 0.015 | 0.003 | - | - | - | - | - | - | - | - | - | - | - | - |
| b | 0.125 | 3.82 | 0.45 | 0.0310 | 0.015 | 0.018 | - | - | - | - | - | - | - | - | - | - | - | - |
| c | 0.066 | 3.35 | 0.06 | 0.0200 | 0.026 | 0.006 | 0.020 | - | 0.15 | - | - | - | - | - | - | 0.0080 | 0.0056 | - |
| d | 0.066 | 3.35 | 0.06 | 0.0200 | 0.026 | 0.006 | 0.010 | - | - | - | - | - | - | - | - | 0.0051 | 0.0023 | - |
| e | 0.082 | 3.38 | 0.07 | 0.0245 | 0.029 | 0.006 | - | 0.15 | - | - | - | - | - | - | 0.02 | - | - | 0.03 |
| f | 0.079 | 3.38 | 0.07 | 0.0245 | 0.029 | 0.008 | - | 0.15 | - | - | - | - | - | - | - | - | - | - |
| g | 0.081 | 3.42 | 0.08 | 0.0255 | 0.026 | 0.008 | 0.020 | - | 0.05 | - | - | - | - | - | - | 0.0035 | - | 0.01 |
| h | 0.074 | 3.42 | 0.08 | 0.0255 | 0.025 | 0.008 | 0.005 | - | - | 0.05 | - | - | - | - | - | 0.0082 | - | - |
| i | 0.072 | 3.46 | 0.12 | 0.0278 | 0.030 | 0.009 | 0.005 | 0.05 | - | 0.10 | - | - | - | - | - | 0.0095 | - | - |
| j | 0.068 | 3.46 | 0.12 | 0.0278 | 0.030 | 0.009 | 0.010 | 0.05 | - | - | - | 0.0015 | - | - | - | - | - | - |
| k | 0.059 | 3.51 | 0.16 | 0.0155 | 0.021 | 0.006 | - | - | - | - | - | - | 0.0043 | 0.10 | - | - | 0.0085 | - |
| l | 0.085 | 3.51 | 0.16 | 0.0165 | 0.021 | 0.006 | - | - | - | - | 0.0015 | - | - | 0.05 | - | - | - | - |

Specifically, in all of Slab Nos. a to l, the chemical composition was set to include, by mass%,
C: 0.020% to 0.150%,
Si: 3.00% to 4.00%,
Mn: 0.01% to 0.50%,
S: 0.0010% to 0.0400%,
acid-soluble Al: 0.010% to 0.050%,
N: 0.002% to 0.020%, and
a balance being Fe and impurities.

In addition, Slab Nos. c to l further included, as a chemical composition, by mass%, at least one selected from the group consisting of:
Bi: 0.0200% or less,
P: 0.100% or less,
Sn: 0.50% or less,
Cu: 0.50% or less,
Cr: 0.50% or less,
Sb: 0.20% or less,
Mo: 0.10% or less,
Nb: 0.0200% or less,
B: 0.0200% or less,
Te: 0.0200% or less,
Ni: 0.20% or less, and
Se: 0.0200% or less.

Then, Slab Nos. a to l were heated to 1350°C and subjected to hot rolling to obtain hot-rolled steel sheets having a sheet thickness of 2.3 mm.

Subsequently, in the hot-rolled sheet annealing step, the hot-rolled steel sheet obtained in the hot rolling step was subjected to hot-rolled sheet annealing at 1100°C for 120 seconds, and the surface thereof was immersed in a pickling solution to be pickled. In this way, a hot-band annealed sheet was obtained.

Subsequently, in the cold rolling step, the hot-band annealed sheet after the hot-rolled sheet annealing step was subjected to one-time cold rolling or a plurality of times of cold rolling with intermediate annealing interposed therebetween to obtain a cold-rolled steel sheet having a final sheet thickness shown in Tables 2A to 2C and Tables 3A to 3C.

Subsequently, in the decarburization annealing step, the cold-rolled steel sheet obtained in the cold rolling step was subjected to decarburization annealing at 830°C for 100 seconds in a wet hydrogen atmosphere.

Subsequently, in the separator applying step, an annealing separator containing the components shown in Tables 2A to 2C and Tables 3A to 3C was applied to the surface of the decarburization-annealed sheet and dried.

Subsequently, in the finish annealing step, the decarburization-annealed sheet coated with the annealing separator in advance was subjected to finish annealing.

After the finish-annealed sheet was obtained by the finish annealing step, the surface treatment step was continuously performed without performing intermediate annealing.

In the surface treatment step, the finish-annealed sheet was surface-treated by being immersed in a treatment solution for 3 seconds to 60 seconds to obtain a surface-treated steel sheet. The treatment solution used at this time contained sulfuric acid and had a total acid concentration of 3 to 5 vol% and a solution temperature of 70 to 90°C. However, for Test No. 35, the surface treatment step was performed under the conditions of an acid concentration of 5 vol% and a solution temperature of 30°C.

In the subsequent tension-applying insulating coating forming step, the insulating coating chemical solution applying step and the baking step were performed. In the insulating coating chemical solution applying step, an insulating coating chemical solution containing silica and aluminum phosphate in an amount of 100 mass% in terms of solid content was applied to the surface of the surface-treated steel sheet.

In the baking step subsequent to the insulating coating chemical solution applying step, the surface-treated steel sheet coated with the insulating coating chemical solution was subjected to a heat treatment to form an insulating coating (secondary coating 3) on the surface of the surface-treated steel sheet. The baking step included a temperature rising process P1 of heating the surface-treated steel sheet to raise the temperature of the surface-treated steel sheet and a soaking process P2 performed after the temperature rising process P1.

In the temperature rising process P1, the average temperature rising rate of the steel sheet, the dew point, and the oxygen concentration were set to the conditions shown in Tables 2A to 2C and Tables 3A to 3C described later.

Similarly, in the soaking process P2, the annealing temperature, the annealing time, the hydrogen concentration, and the atmosphere dew point were set to the conditions shown in Tables 2A to 2C and Tables 3A to 3C described later.

The coating adhesion, the iron loss, and the magnetic flux density of the test pieces obtained through the above tension-applying insulating coating forming step were evaluated. In all examples, the average film thickness of the secondary coating was 1.0 to 5.0 µm.

Specifically, first, the coating adhesion was evaluated by a coating residual area fraction when the test piece is wound around a cylinder having a diameter of 20 mm and bent 180°. The area fraction of the residual surface of the coating in the area of the steel sheet in contact with the cylinder was calculated. The area of the steel sheet in contact with the roll was determined by calculation. The area of the residual surface was determined by capturing a photograph of the steel sheet after the test and performing image analysis on the captured image.

A case where the coating residual area fraction was 90% or more was evaluated as Very Good (VG), a case where the coating residual area fraction was 85% or more and less than 90% was evaluated as Good (G), a case where the coating residual area fraction was 80% or more and less than 85% was evaluated as Fair (F), and a case where the coating residual area fraction was less than 80% was evaluated as Poor (P). A case when the coating residual area fraction was 80% or more was determined to be excellent in coating adhesion.

Subsequently, for the iron loss characteristics, the test piece was evaluated according to a single sheet tester (SST). Iron loss W17/50 (W/kg) defined as a power loss per unit weight (1 kg) of the steel sheet was measured under the conditions of an AC frequency of 50 Hz and an excitation magnetic flux density of 1.7 T.

When the iron loss W17/50 was less than 0.75 W/kg, it was determined that the iron loss characteristics were excellent.

For the magnetic flux density, magnetic flux density B8 (T) in the rolling direction was measured by applying a magnetic field of 800 A/m to the test piece.

The above results are shown in Tables 2A to 2C and Tables 3A to 3C.

**[Table 2A]**

| Test No. | Slab No. | Base steel sheet | Finish annealing step | | | | |
|---|---|---|---|---|---|---|---|
| | | Sheet thickness | Annealing separator | | | | |
| | | | MgO | Alumina | Bismuth chloride | Bismuth oxychloride | Iron chloride |
| | | mm | mass% | mass% | mass% | mass% | mass% |
| 1 | a | 0.23 | 18.5 | 76.8 | 0.0 | 4.7 | 0.0 |
| 2 | b | 0.23 | 18.5 | 77.0 | 0.0 | 4.5 | 0.0 |
| 3 | c | 0.23 | 18.3 | 76.9 | 4.8 | 0.0 | 0.0 |
| 4 | d | 0.23 | 19.2 | 75.5 | 5.3 | 0.0 | 0.0 |
| 5 | e | 0.23 | 35.8 | 54.4 | 5.2 | 0.0 | 4.6 |
| 6 | f | 0.23 | 36.2 | 53.7 | 4.9 | 0.0 | 5.2 |
| 7 | g | 0.23 | 35.7 | 55.0 | 9.3 | 0.0 | 0.0 |
| 8 | h | 0.23 | 36.1 | 53.4 | 10.5 | 0.0 | 0.0 |
| 9 | i | 0.23 | 46.5 | 48.0 | 5.5 | 0.0 | 0.0 |
| 10 | j | 0.23 | 46.5 | 47.2 | 6.3 | 0.0 | 0.0 |
| 11 | k | 0.23 | 46.8 | 47.0 | 6.2 | 0.0 | 0.0 |
| 12 | l | 0.23 | 47.3 | 47.0 | 5.7 | 0.0 | 0.0 |

**[Table 2B]**

| Test No. | Slab No. | Baking step (tension-applying insulating coating forming step) | | | | | | |
|---|---|---|---|---|---|---|---|---|
| | | Temperature rising process P1 | | | Soaking process P2 | | | |
| | | Average temperature rising rate of steel sheet (100°C to 600°C) | Dew point | Oxygen concentration | Annealing temperature | Annealing time | Hydrogen concentration | Atmosphere dew point |
| | | °C/s | °C | vol% | °C | s | vol% | °C |
| 1 | a | 10 | 5 | 20 | 800 | 20 | 1 | -18 |
| 2 | b | 10 | 5 | 20 | 800 | 20 | 1 | -18 |
| 3 | c | 10 | 5 | 20 | 800 | 20 | 1 | -18 |
| 4 | d | 10 | 10 | 20 | 800 | 20 | 1 | -18 |
| 5 | e | 15 | 10 | 20 | 810 | 15 | 5 | 15 |
| 6 | f | 15 | 10 | 20 | 810 | 15 | 5 | 15 |
| 7 | g | 15 | 15 | 20 | 810 | 15 | 5 | 15 |
| 8 | h | 15 | 15 | 20 | 810 | 15 | 5 | 15 |
| 9 | i | 18 | 15 | 20 | 815 | 10 | 5 | 18 |
| 10 | j | 18 | 20 | 20 | 815 | 10 | 5 | 18 |
| 11 | k | 18 | 20 | 20 | 815 | 10 | 5 | 18 |
| 12 | l | 18 | 20 | 20 | 815 | 10 | 5 | 18 |

**[Table 2C]**

| Test No. | Slab No. | Grain-oriented electrical steel sheet | | | Remark |
|---|---|---|---|---|---|
| | | Product characteristics | | | |
| | | Coating adhesion | Magnetic flux density | Iron loss | |
| | | - | T | W/kg | |
| 1 | a | F | 1.94 | 0.74 | Invention Example |
| 2 | b | F | 1.94 | 0.73 | Invention Example |
| 3 | c | F | 1.96 | 0.69 | Invention Example |
| 4 | d | F | 1.96 | 0.68 | Invention Example |
| 5 | e | F | 1.97 | 0.69 | Invention Example |
| 6 | f | F | 1.97 | 0.68 | Invention Example |
| 7 | g | F | 1.96 | 0.68 | Invention Example |
| 8 | h | F | 1.98 | 0.67 | Invention Example |
| 9 | i | F | 1.98 | 0.68 | Invention Example |
| 10 | j | F | 1.95 | 0.66 | Invention Example |
| 11 | k | F | 1.96 | 0.68 | Invention Example |
| 12 | l | F | 1.96 | 0.68 | Invention Example |

**[Table 3A]**

| Test No. | Slab No. | Base steel sheet | Finish annealing step | | | | |
|---|---|---|---|---|---|---|---|
| | | Sheet thickness | Annealing separator | | | | |
| | | | MgO | Alumina | Bismuth chloride | Bismuth oxychloride | Iron chloride |
| | | mm | mass% | mass% | mass% | mass% | mass% |
| 21 | d | 0.22 | 18.8 | 76.9 | 4.3 | 0.0 | 0.0 |
| 22 | e | 0.22 | 19.2 | 75.8 | 5.0 | 0.0 | 0.0 |
| 23 | f | 0.19 | 35.9 | 54.3 | 0.0 | 0.0 | 9.8 |
| 24 | g | 0.19 | 40.3 | 54.8 | 0.0 | 4.9 | 0.0 |
| 25 | h | 0.17 | 46.7 | 47.2 | 0.0 | 6.1 | 0.0 |
| 26 | i | 0.17 | 44.3 | 45.5 | 0.0 | 10.2 | 0.0 |
| 27 | a | 0.22 | 18.5 | 76.6 | 4.9 | 0.0 | 0.0 |
| 28 | a | 0.22 | 18.7 | 76.5 | 4.8 | 0.0 | 0.0 |
| 29 | b | 0.22 | 36.1 | 54.0 | 0.0 | 0.0 | 9.9 |
| 30 | b | 0.22 | 40.3 | 55.0 | 0.0 | 4.7 | 0.0 |
| 31 | c | 0.22 | 46.9 | 47.6 | 0.0 | 5.5 | 0.0 |
| 32 | c | 0.22 | 44.9 | 44.9 | 0.0 | 10.2 | 0.0 |
| 33 | d | 0.22 | 19.1 | 75.6 | 5.3 | 0.0 | 0.0 |
| 34 | d | 0.22 | 18.6 | 76.8 | 4.6 | 0.0 | 0.0 |
| 35 | f | 0.22 | 80.5 | 9.0 | 0 | 10.5 | 0 |

**[Table 3B]**

| Test No. | Slab No. | Baking step (tension-applying insulating coating forming step) | | | | | | |
|---|---|---|---|---|---|---|---|---|
| | | Temperature rising process P1 | | | Soaking process P2 | | | |
| | | Average temperature rising rate of steel sheet (100°C to 600°C) | Dew point | Oxygen concentration | Annealing temperature | Annealing time | Hydrogen concentration | Atmosphere dew point |
| | | °C/s | °C | vol% | °C | s | vol% | °C |
| 21 | d | 10 | 10 | 20 | 800 | 120 | 2 | 9 |
| 22 | e | 10 | 10 | 20 | 950 | 120 | 2 | 9 |
| 23 | f | 20 | 20 | 20 | 840 | 60 | 5 | 28 |
| 24 | g | 20 | 20 | 20 | 960 | 60 | 5 | 28 |
| 25 | h | 50 | 15 | 20 | 850 | 10 | 5 | 36 |
| 26 | i | 380 | 15 | 20 | 880 | 10 | 5 | 36 |
| 27 | a | 5 | 15 | 20 | 800 | 30 | 3 | 38 |
| 28 | a | 450 | 15 | 20 | 800 | 30 | 3 | 38 |
| 29 | b | 30 | -5 | 18 | 800 | 30 | 1 | 30 |
| 30 | b | 30 | 32 | 18 | 800 | 50 | 1 | 30 |
| 31 | c | 40 | 15 | 20 | 780 | 50 | 10 | 34 |
| 32 | c | 40 | 15 | 20 | 1020 | 50 | 10 | 34 |
| 33 | d | 50 | 20 | 20 | 960 | 50 | 1 | -30 |
| 34 | d | 50 | 20 | 20 | 960 | 50 | 1 | 45 |
| 35 | f | 100 | 15 | 20 | 850 | 20 | 15 | 34 |

**[Table 3C]**

| Test No. | Slab No. | Grain-oriented electrical steel sheet | | | Remark |
|---|---|---|---|---|---|
| | | Product characteristics | | | |
| | | Coating adhesion | Magnetic flux density | Iron loss | |
| | | - | T | W/kg | |
| 21 | d | F | 1.94 | 0.63 | Invention Example |
| 22 | e | F | 1.94 | 0.64 | Invention Example |
| 23 | f | G | 1.96 | 0.59 | Invention Example |
| 24 | g | G | 1.97 | 0.59 | Invention Example |
| 25 | h | VG | 1.98 | 0.57 | Invention Example |
| 26 | i | VG | 1.98 | 0.58 | Invention Example |
| 27 | a | P | 1.93 | 0.75 | Comparative Example |
| 28 | a | P | 1.93 | 0.77 | Comparative Example |
| 29 | b | P | 1.94 | 0.72 | Comparative Example |
| 30 | b | P | 1.96 | 0.75 | Comparative Example |
| 31 | c | P | 1.94 | 0.81 | Comparative Example |
| 32 | c | P | 1.95 | 0.72 | Comparative Example |
| 33 | d | P | 1.96 | 0.71 | Comparative Example |
| 34 | d | P | 1.95 | 0.73 | Comparative Example |
| 35 | f | F | 1.95 | 0.65 | Invention Example |

First, in the results of Tables 2A to 2C, the manufacturing conditions of the temperature rising process P1 and the soaking process P2 were set in the ranges described in the above embodiment in all of Test Nos. 1 to 12 as the invention examples. That is, in the temperature rising process P1, the average temperature rising rate of the steel sheet in a steel sheet temperature range of 100°C to 600°C was 10°C/s to 400°C/s in an atmosphere having an oxygen concentration of 1 vol% to 21 vol% and a dew point of 0°C to 30°C. Further, in the soaking process P2, the holding time, at a constant steel sheet temperature in a range of 800°C to 1000°C and in a soaking atmosphere whose hydrogen concentration was 1 vol% to 15 vol% and whose atmosphere dew point was a constant value in a range of -20°C to +40°C, was 5 seconds to 200 seconds.

In Examples of Tables 2A to 2C, the steel components were variously changed, but since the manufacturing conditions satisfied the above range, relatively favorable coating adhesion was obtained. However, since the average temperature rising rate of the steel sheet in the temperature rising process P1 and the annealing temperature and the annealing atmosphere (hydrogen concentration, atmosphere dew point) in the soaking process P2 were out of preferable ranges, the evaluation was only "F".

On the other hand, the iron loss W17/50 was less than 0.75 W/kg in all of Test Nos. 1 to 12 as shown in Tables 2A to 2C.

In addition, as shown in Tables 2A to 2C, in all of Test Nos. 1 to 12, no significant decrease was observed in the magnetic flux density. Therefore, both the coating adhesion and the iron loss satisfied the acceptance criteria without impairing the magnetic flux density.

Subsequently, in the results of Tables 3A to 3C in which both the manufacturing conditions and the steel components were changed, the results were divided depending on the difference in the manufacturing conditions.

First, in all of Test Nos. 21 to 26 and 35 as invention examples, in the temperature rising process P1, the average temperature rising rate of the steel sheet in a steel sheet temperature range of 100°C to 600°C was in a range of 10°C/s to 400°C/s in an atmosphere having an oxygen concentration of 1 vol% to 21 vol% and a dew point of 0°C to 30°C. In addition, in all of Test Nos. 21 to 26 and 35, in the soaking process P2, the holding time, at a constant steel sheet temperature in a range of 800°C to 1000°C and in a soaking atmosphere whose hydrogen concentration was 1 vol% to 15 vol% and whose atmosphere dew point was a constant value in a range of -20°C to +40°C, was in a range of 5 seconds to 200 seconds.

As a result, in all of these Test Nos. 21 to 26 and 35, both the coating adhesion and the iron loss satisfied the acceptance criteria. In particular, Test Nos. 23 to 26 showed high coating adhesion, and among them, Test Nos. 25 and 26 exhibited the highest coating adhesion.

In addition, as shown in Tables 3A to 3C, in all of Test Nos. 21 to 26, no significant decrease was observed in the magnetic flux density. Therefore, it was excellent in both the coating adhesion and the iron loss without impairing the magnetic flux density.

On the other hand, in Test No. 27 as a comparative example, the average temperature rising rate of the steel sheet in the temperature rising process P1 was 5°C/s, which was less than 10°C/s as the lower limit of the range of the present invention. As a result, it was not sufficient in both the coating adhesion and the iron loss.

In Test No. 28 as a comparative example, the average temperature rising rate of the steel sheet in the temperature rising process P1 was 450°C/s, which was more than 400°C/s as the upper limit of the range of the present invention. As a result, it was not sufficient in both the coating adhesion and the iron loss.

In Test No. 29 as a comparative example, the dew point in the temperature rising process P1 was -22°C, which was less than -20°C as the lower limit of the range of the present invention. As a result, although the iron loss satisfied the acceptance criteria, the coating adhesion was not sufficient.

In Test No. 30 as a comparative example, the dew point in the temperature rising process P1 was 32°C, which was more than 30°C as the upper limit of the range of the present invention. As a result, it was not sufficient in both the coating adhesion and the iron loss.

In Test No. 31 as a comparative example, the annealing temperature in the soaking process P2 was 780°C, which was less than 800°C as the lower limit of the range of the present invention. As a result, it was not sufficient in both coating adhesion and iron loss.

In Test No. 32 as a comparative example, the annealing temperature in the soaking process P2 was 1020°C, which was more than 1000°C as the upper limit of the range of the present invention. As a result, although the iron loss satisfied the acceptance criteria, the coating adhesion was not sufficient.

In Test No. 33 as a comparative example, the atmosphere dew point in the soaking process P2 was -30°C, which was less than -20°C as the lower limit of the range of the present invention. As a result, although the iron loss satisfied the acceptance criteria, the coating adhesion was not sufficient.

In Test No. 34 as a comparative example, the atmosphere dew point in the soaking process P2 was +45°C, which was more than +40°C as the upper limit of the range of the present invention. As a result, although the iron loss satisfied the acceptance criteria, the coating adhesion was not sufficient.

From the above results, it was confirmed that the conditions of both the temperature rising process P1 and the soaking process P2 should be appropriately controlled in order to be excellent in both the coating adhesion and the iron loss. Specifically, in the temperature rising process P1, the average temperature rising rate of the steel sheet in a steel sheet temperature range of 100°C to 600°C needs to be 10°C/s to 400°C/s in an atmosphere having an oxygen concentration of 1 vol% to 21 vol% and a dew point of 0°C to 30°C. Further, in the soaking process P2, the holding time, at a constant steel sheet temperature in a range of 800°C to 1000°C and in a soaking atmosphere whose hydrogen concentration is 1 vol% to 15 vol% and whose atmosphere dew point is a constant value in a range of -20°C to +40°C, needs to be 5 seconds to 200 seconds.

### INDUSTRIAL APPLICABILITY

According to the present invention, it is possible to manufacture a grain-oriented electrical steel sheet having high coating adhesion (secondary coating adhesion) without impairing magnetic characteristics, without performing intermediate annealing. Therefore, industrial applicability is high.

### REFERENCE SIGNS LIST

1 Grain-oriented electrical steel sheet
2 Base steel sheet
3 Secondary coating (tension-applying insulating coating)
4 Oxide layer
P1 Temperature raising process
P2 Soaking process

## Claims

1. A method for manufacturing a grain-oriented electrical steel sheet, the method comprising:
a hot rolling step of heating and hot rolling a slab including, as a chemical composition, by mass%,
C: 0.020% to 0.150%,
Si: 3.00% to 4.00%,
Mn: 0.01% to 0.50%,
S: 0.0010% to 0.0400%,
acid-soluble Al: 0.010% to 0.050%,
N: 0.002% to 0.020%,
Bi: 0.0000% to 0.0200%,
P: 0.000% to 0.100%,
Sn: 0.00% to 0.50%,
Cu: 0.00% to 0.50%,
Cr: 0.00% to 0.50%,
Sb: 0.00% to 0.20%,
Mo: 0.00% to 0.10%,
Nb: 0.0000% to 0.0200%,
B: 0.0000% to 0.0200%,
Te: 0.0000% to 0.0200%,
Ni: 0.00% to 0.20%,
Se: 0.0000% to 0.0200%, and
a balance being Fe and impurities to obtain a hot-rolled steel sheet;
a hot-rolled sheet annealing step of subjecting the hot-rolled steel sheet to hot-rolled sheet annealing to obtain a hot-band annealed sheet and then immersing the hot-band annealed sheet in a pickling solution;
a cold rolling step of subjecting the hot-band annealed sheet to cold rolling to obtain a cold-rolled steel sheet;
a decarburization annealing step of subjecting the cold-rolled steel sheet to decarburization annealing to obtain a decarburization-annealed sheet;
a separator applying step of applying an annealing separator containing MgO, Al₂O₃, and a chloride to a surface of the decarburization-annealed sheet;
a finish annealing step of subjecting the decarburization-annealed sheet coated with the annealing separator to finish annealing to obtain a finish-annealed sheet;
a surface treatment step of pickling a surface of the finish-annealed sheet to obtain a surface-treated steel sheet; and
a tension-applying insulating coating forming step including an insulating coating chemical solution applying step of applying an insulating coating forming solution containing 80 mass% or more in total of aluminum phosphate and silica to a surface of the surface-treated steel sheet, and a baking step of subjecting the surface-treated steel sheet coated with the insulating coating forming solution to a heat treatment to form a tension-applying insulating coating on the surface of the surface-treated steel sheet, wherein
the heat treatment in the baking step includes a temperature rising process and a soaking process,
in the temperature rising process, an average temperature rising rate of the steel sheet in a steel sheet temperature range of 100°C to 600°C is 10°C/s to 400°C/s in an atmosphere having an oxygen concentration of 1 vol% to 21 vol% and a dew point of 0°C to 30°C, and
in the soaking process, a holding time, at a constant steel sheet temperature in a range of 800°C to 1000°C and in a soaking atmosphere whose hydrogen concentration is 1 vol% to 15 vol% and whose atmosphere dew point is a constant value in a range of -20°C to +40°C, is 5 seconds to 200 seconds.

2. The method for manufacturing a grain-oriented electrical steel sheet according to claim 1, wherein in the annealing separator, a content of MgO is 0.0 mass% or more and 79.5 mass% or less, a content of Al₂O₃ is 20.0 mass% or more and 99.5 mass% or less, and the balance is the chloride.

3. The method for manufacturing a grain-oriented electrical steel sheet according to claim 1 or 2, wherein in the surface treatment step, the finish-annealed sheet is immersed in a treatment solution containing at least one of hydrochloric acid, sulfuric acid, nitric acid, and phosphoric acid, a total acid concentration of 1 vol% to 20 vol%, and a solution temperature of 50°C to 90°C for 3 seconds to 60 seconds.

4. The method for manufacturing a grain-oriented electrical steel sheet according to claim 1 or 2, wherein the slab includes, as a chemical composition, by mass%, at least one selected from the group consisting of:
Bi: more than 0.0000% and 0.0200% or less,
P: more than 0.000% and 0.100% or less,
Sn: more than 0.00% and 0.50% or less,
Cu: more than 0.00% and 0.50% or less,
Cr: more than 0.00% and 0.50% or less,
Sb: more than 0.00% and 0.20% or less,
Mo: more than 0.00% and 0.10% or less,
Nb: more than 0.0000% and 0.0200% or less,
B: more than 0.0000% and 0.0200% or less,
Te: more than 0.0000% and 0.0200% or less,
Ni: more than 0.00% and 0.20% or less, and
Se: more than 0.0000% and 0.0200% or less.
